# DEMANDE DE BREVET EUROPEEN

(11) **EP 0 905 854 A1**
(43) Date de publication de la demande: **31.03.1999**
(21) Numéro de dépôt: 98117019.4
(22) Date de dépôt: 09.09.1998
(51) Int. Cl.: H02J 7/00

(54) **Dispositif d'alimentation autonome pour outillage portable équipé de moteurs universels**

(30) Priorité: 29.09.1997 FR 9712187
(71) Demandeur: Patrat, Claude René Jean, 32420 Simorre (FR)
(72) Inventeur: Patrat, Claude René Jean, 32420 Simorre (FR)

(57) **Abrégé**

Dispositif d'alimentation autonome pour outillage portable équipé de moteurs universels.

L'invention concerne un accumulateur de courant au plomb de 224 volts de tension à ses bornes, permettant l'alimentation de tout l'appareillage portable d'une puissance moyenne équipé de moteurs universels.

De construction facile, d'un poids modeste facilement portable à proximité du lieu d'utilisation, évitant le bruit et la pollution de certains modes d'alimentation.

Cet accumulateur selon l'invention est particuliérement conçu pour l'alimentation de l'outillage portable sur les chantiers, assurant une parfaite sécurité de l'usager.

## Description

La présente invention concerne un accumulateur de courant au plomb, pour l'alimentation de tout l'outillage portable d'une puissance moyenne, équipé de moteurs universels, ainsi que les fers à souder pistolets à colle et éclairage à incandescence.

L'ensemble se présent sous forme de mallette qui se compose de 112 éléments de 2 volts et de 2,5 ampères chacun connectés en série, totalisant 224 volts à ses bornes, un chargeur intégré dans l'ensemble dépourvu de transformateur (d'ou gain de poids et de coût).

Le temps de charge est de 10 heures, le poids total de l'ensemble est de 12 kilos.

Pour cette réalisation, la puissance déterminée est limitée mais pouvant être construit à une capacité plus élevée pour un outillage demandant une plus grande autonomie.

L'alimentation de cet outillage est traditionnellement effectuée par le secteur de l'E.D.F ou des groupes électrogènes à moteurs thermiques. Souvent, les chantiers en construction ainsi que certains bâtiments éloignés des maisons d'habitations sont dépourvus de l'alimentation secteur.

L'outillage étant utilisé par intermittence, ce mode d'alimentation serait mieux adapté que le groupe électrogène, qui une fois lancé tourne sans interruption pouvant porter nuisance sonore et polluante à son voisinage, et surtout à son utilisateur si celui-ci travaille dans un local dépourvu d'aération suffisante.

De part, sa mise en oeuvre simple, d'ou gain de temps et l'absence de carburant inflammable justifierait l'emploi de ce mode d'alimentation. D'une grande facilité d'utilisation, pouvant le porter à proximité des travaux, ne nécessitant pas de rallonges de grandes longueur, qui sont encombrantes et dangereuses, ni de transformateurs d'isolement obligatoires sur les chantiers.

Les variateurs de vitesse électroniques dont certaines perceuses sont équipées ne réagissent pas à ce type d'alimentation, mais ne subissent aucun dommage. Et l'on obtient la rotation de la perceuse par pression complète de la gâchette.

C'est la raison pour laquelle ce mode d'alimentation a été choisi plutôt que le système traditionnel à convertisseur fonctionnant à partir de plusieurs accumulateurs comportant obligatoirement un onduleur de grosse intensité ayant une résistance ohmique assez élevée provoquant une perte de rendement, de plus le système de transformation en augmente considérablement le poids qui en fait un système inadapté pour le transport et un appareil beaucoup plus fragile et onéreux.

Sur le plan pratique, d'après les essais il a été possible avec une perceuse à percussion, de poser 50 chevilles de 10 millimètres de diamètre dans le béton, et en continuant sans recharge, avec une ébarbeuse de 500 watts, de tronçonner 3 mètres de tôle de 1 millimètre d'épaisseur correspondant à la pose d'un chemin de cable de 0,60 mètre de largeur et de 20 mètres de longueur comportant 2 coudes

Ce qui à pour effet d'employer la journée d'un monteur électricien.

## Revendications

1. Accumulateur d'énergie électrique pour alimenter l'outillage électrique caractérisé en ce qu'il est composé d'un bac en forme de mallette contenant le nombre nécessaire d'éléments accumulateurs d'énergie électrique connectés en série totalisant aux bornes d'utilisation une tension de 224 volts permettant d'alimenter l'outillage électrique équipé de moteurs universels fonctionnant sur une tension nominale de 220 volts.

2. Accumulateur selon la revendication 1 caractérisé en ce qu'il peut être réalisé à des capacités différentes.

3. Accumulateur selon la revendication 1 ou la revendication 2 caractérisé en ce qu'il y est inséré un chargeur dépourvu de transformateur.
